# EUROPÄISCHE PATENTANMELDUNG

(11) **EP 1 372 249 A2**
(43) Veröffentlichungstag der Anmeldung: **17.12.2003**
(21) Anmeldenummer: 03001840.2
(22) Anmeldetag: 29.01.2003
(51) Int. Cl.: H02K 21/14, H02K 1/18

(54) **Transversalflussmaschine, insbesondere Unipolar-Transversalflussmaschine**

(30) Priorität: 06.06.2002 DE 10225156
(71) Anmelder: ROBERT BOSCH GMBH, 70442 Stuttgart (DE)
(72) Erfinder: Zierer, Gerald, 77815 Buehl (DE); Kastinger, Guenter, 76571 Gaggenau-Sulzbach (DE)

(57) **Zusammenfassung**

Es wird eine Transversalflußmaschine, insbesondere eine Unipolar-Transversalflußmaschine, angegeben, die mindestens ein in einem aus zwei axial zusammengefügten Gehäuseteilen (161, 162) zusammengesetzten Gehäuse (16) aufgenommenes Statormodul (14) aufweist, das eine konzentrisch zur Gehäuseachse angeordnete Ringspule (21) sowie diese von außen und innen übergreifende Statorelemente (23, 24) umfaßt. Zwecks einfacher Montage der Einzelteile der Maschine im einfachen Fügeprozeß und toleranzengenauem Einhalten eines kleinen Luftspalts (25) zwischen Stator (11) und Rotor (12) sind auf einander zugekehrten Gehäuseteilen (161, 162) jeweils axial vorspringende Klemmen (27, 29) für die Statorelemente (24, 23) mit Positionierelementen (31, 33) zu deren radialen Fixierung ausgebildet (Fig. 6).

## Beschreibung

### Stand der Technik

Die Erfindung geht aus von einer Transversalflußmaschine, insbesondere einer Unipolar-Transversalflußmaschine, nach dem Oberbegriff des Anspruchs 1.

Bei einer bekannten Unipolar-Transversalflußmaschine (DE 100 39 466 A1) besteht das das Statormodul aufnehmende Gehäuse aus zwei identisch ausgebildeten Halbschalen, die spiegelsymmetrisch unter Einschluß des Statormoduls aneinandergesetzt sind. Jede Halbschale weist eine gitterartige Struktur mit einem Innenring und einem dazu konzentrischen Außenring auf, die durch Radialstege einstückig miteinander verbunden sind. In den Halbschalen sind einerseits Radialnuten zur Aufnahme der Statorjoche, die sich über Innenring, Radialsteg und Außenring erstrecken, sowie andererseits Radialnuten zum Einstecken der Statorstege ausgebildet, die sich nur über den Innenring erstrecken. Neben diesen Radialnuten weisen die beiden aneinandergesetzten Halbschalen spiegelsymmetrisch einander gegenüberliegende, konzentrisch zur Gehäuseachse angeordnete Vertiefungen zur Aufnahme der Ringspule des Statormoduls auf. Die Statorjoche und die Radialnuten sind so aufeinander abgestimmt, daß bei in den zugehörigen Radialnuten eingesetzten Statorjochen und Statorstegen die beiden Halbschalen des Gehäuses radial und axial unverschieblich fixiert sind. Hierzu weisen die Statorjoche an beiden Seiten ihres Querstegs jeweils einen nach außen radial vorspringenden Haken auf, der bei in die Radialnut eingestecktem Statorjoch einen Radialsteg in den beiden Halbschalen auf dessen von der Radialnut abgekehrten Rückseite fomschlüssig übergreift. An dem im Außenring liegenden Ende jeder Radialnut ist zur Aufnahme der Statorjoche eine radiale Ausnehmung in den Nutboden eingebracht, deren radiale Tiefe so bemessen ist, das bei lagerichtig in die Radialnut eingesetztem Statorjoch der Haken mit seiner Hakenwurzel im Grunde der Ausnehmung anschlägt. Damit sind einerseits die Statorjoche in Radialrichtung toleranzgenau positioniert und klammern andererseits die beiden Halbschalen axial aneinander.

### Vorteile der Erfindung

Die erfindungsgemäße Transversalfluß- bzw. Unipolar-Transversalflußmaschine mit den Merkmalen des Anspruchs 1 hat den Vorteil einer einfachen Montage durch einfache Fügeprozesse der Einzelteile, die das Einhalten der bei dieser Motorbauart erforderlichen, besonders kleinen Luftspalte zwischen Rotor und Stator gewährleistet.

Durch die in den weiteren Ansprüchen aufgeführten Maßnahmen sind vorteilhafte Weiterbildungen und Verbesserungen der im Anspruch 1 angegebenen Transversalflußmaschine bzw. Unipolar-Transversalflußmaschine möglich.

Gemäß einer vorteilhaften Ausführungsform der Erfindung stehen die Klemmen auf einander zugekehrten, radialen Planflächen der Gehäuseteile axial vor und die Statorelemente tauchen mit ihren radialen Stirnkanten in die Klemmen ein. Solchermaßen ausgebildete Klemmen lassen sich leicht beim Spritzen der Gehäuseteile mit einfacher Spritzformausbildung mit anformen.

Gemäß einer vorteilhaften Ausführungsform der Erfindung sind die miteinander korrespondierenden Positionierelemente für die radiale Positionierung der Statorelemente von spitzwinkligen Einkerbungen in den radialen Stirnkanten der Statorelemente und von formschlüssig in die Einkerbungen eingreifenden, spitzwinkligen Höckern in den an den Gehäuseteilen angeordneten Klemmen gebildet.

Gemäß einer bevorzugten Ausführungsform der Erfindung liegt die Ringspule in einem Spulenkörper ein, in dem Schlitze zum Einführen der Statorelemente vorgesehen sind. Die Schlitzbreite der Schlitze ist größer als die Dicke der Statorelemente, so daß diese mit einem gewissen Spiel in den Schlitzen einliegen. Der in Umfangsrichtung gesehene Abstand der Schlitze voneinander entspricht dem gegenseitigen Abstand der Statorelemente. Durch diese im Spulenkörper vorhandenen Schlitze können die Statorelemente bei der Montage auf der Ringspule so vorpositioniert werden, daß durch axiales Aufschieben der beiden Gehäuseteile auf den Spulenkörper die Statorelemente mit ihren radialen Stirnkanten in die zugeordneten Klemmen an den radialen Planflächen der beiden Gehäuseteile eintauchen und nach Verpressen mit den beiden Gehäuseteilen axial und über die Positionierelemente radial positionsgenau fixiert sind. Durch diese Vorpositionierung der Statorelemente müssen die üblicherweise aus mehreren Lamellen bestehenden Statorelemente keinem Paketierverfahren unterzogen werden, sondern können lose in die Schlitze des Spulenkörpers eingesetzt werden.

Gemäß einer vorteilhaften Ausführungsform der Erfindung weisen bei dem aus nicht magnetisch leitfähigem Material gefertigten Gehäuse der eine Gehäuseteil Topfform und der andere Gehäuseteil Scheibenform auf, wobei jeder Gehäuseteil eine zentrale Ausnehmung enthält. Da aus Gründen des zuverlässigen Hochlaufs der Transversalflußmaschine üblicherweise mindestens zwei Statormodule axial nebeneinander angeordnet und ggf. um 90° elektrisch gegeneinander verdreht sind, liegen die beiden scheibenförmigen Gehäuseteile mit ihren von den Klemmen abgekehrten Scheibenflächen unmittelbar aneinander und werden von den mit ihren kreisringförmigen Topfrändern aneinanderstoßenden, topfförmigen Gehäuseteilen beider Statormodule übergriffen. Dies hat den Vorteil, daß bei einer zweisträngigen Ausführung der Maschine die Gehäuseteile für beide Statormodule identisch gefertigt werden können und zur Herstellung einer relativen Drehwinkellage von 90° zueinander nur gegeneinander verdreht werden müssen. Sollten bereits axial nebeneinander auf der Rotorwelle angeordnete Rotormodule der Maschine eine Drehwinkelverschiebung von 90° elektrisch gegeneinander aufweisen, so werden die beiden scheibenförmigen Gehäuseteile der Statormodule ohne Verdrehung aneinandergefügt und durch das unter axialer Preßkraft erfolgende Verbinden der beiden topfförmigen Gehäuseteile aneinandergehalten. Selbstverständlich können die beiden scheibenförmigen Gehäuseteile auch zusätzlich miteinander verbunden oder einstückig hergestellt werden. In letztem Fall entfällt jedoch der vorstehend beschriebene Fertigungsvorteil von identisch ausgebildeten Gehäuseteilen.

Gemäß einer bevorzugten Ausführungsform der Erfindung ist zwischen den beiden scheibenförmigen Gehäuseteilen die elektrische Zuführung zu den beiden Ringspulen in den Statormodulen in Form eines Stanzgitters angeordnet. Dadurch vereinfacht sich die Herausführung der elektrischen Spulenanschlüsse aus den beiden Statormodulen.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt einer zweisträngigen Transversalflußmaschine in perspektivischer Darstellung,
- Fig. 2: eine perspektivische Darstellung der zweisträngigen Transversalflußmaschine in Fig. 1 nach Abziehen der beiden topfförmigen Gehäuseteile der Gehäuse der Statormodule,
- Fig. 3: ausschnittweise die gleiche Darstellung wie in Fig. 2 bei entfernten Statorjochen,
- Fig. 4: die gleiche Darstellung wie in Fig. 3 bei abgezogener Ringspule,
- Fig. 5: eine Explosionsdarstellung des Gehäuses des in Fig. 2 hinteren Statormoduls,
- Fig. 6: einen halbseitig dargestellten Längsschnitt einer zweisträngigen Unipolar-Transversalflußmaschine.

### Beschreibung der Ausführungsbeispiele

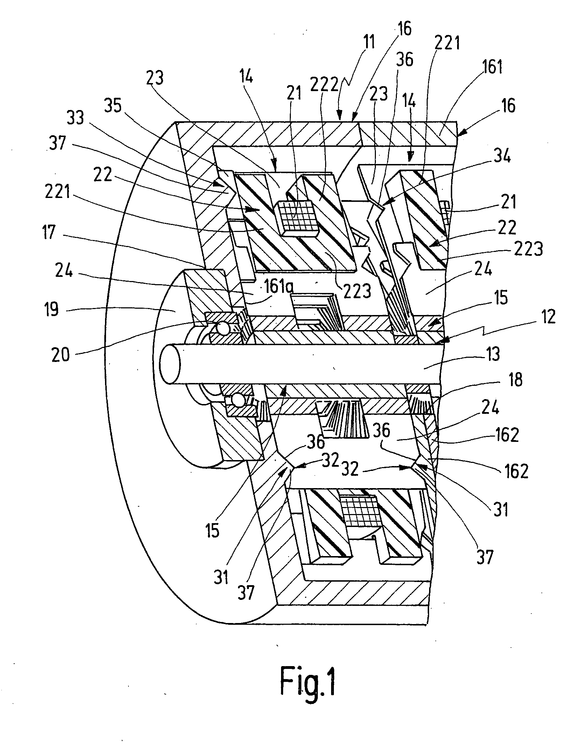

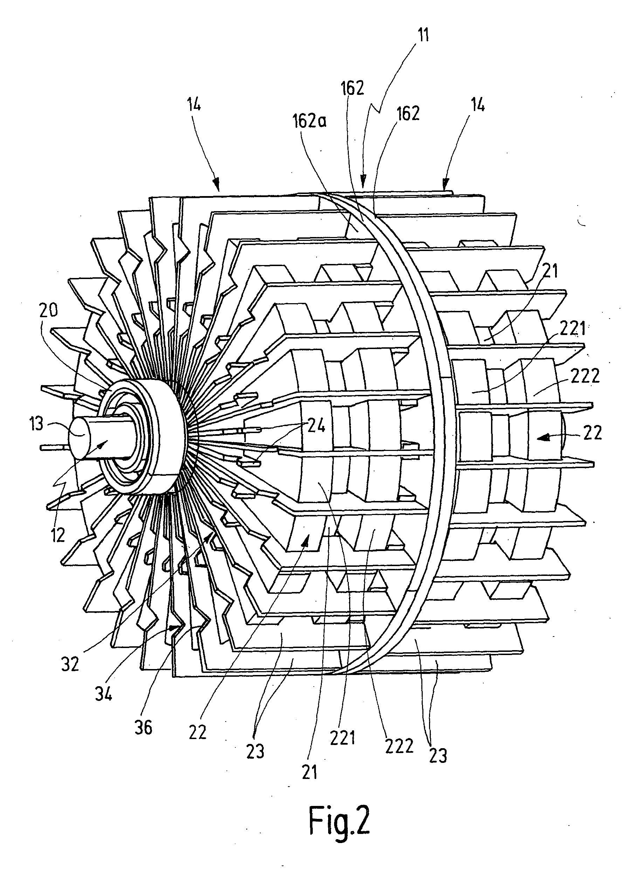

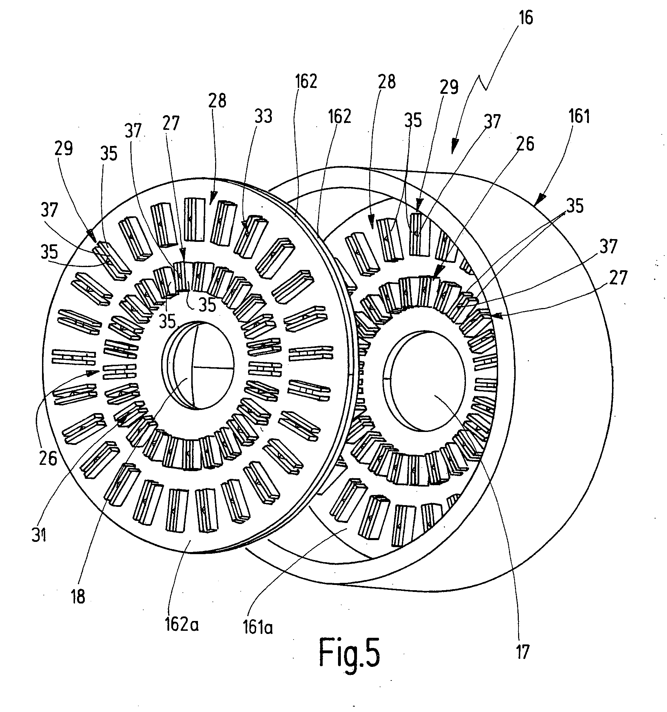

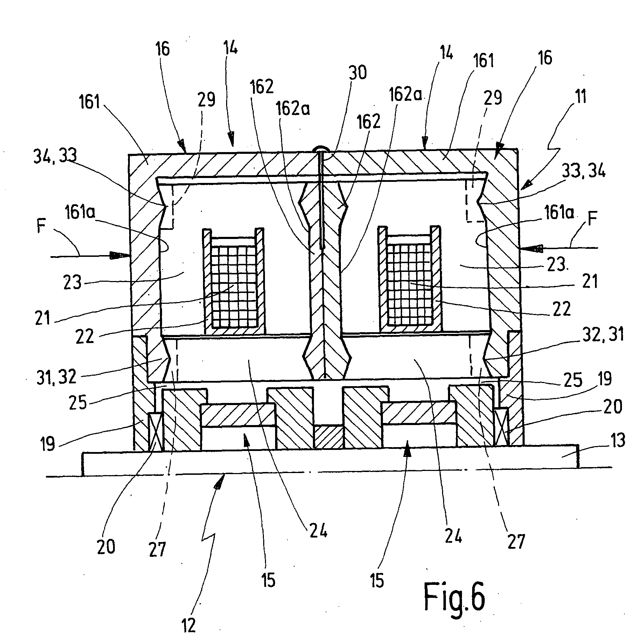

Die in Fig. 1 ausschnittweise dargestellte Transversalflußmaschine und die in Fig. 6 ausschnittweise dargestellte Unipolar-Transversalflußmaschine weisen jeweils einen Stator 11 sowie einen im Stator 11 umlaufenden Rotor 12 auf, der drehfest auf einer Rotorwelle 13 sitzt. Der Stator 11 umfaßt zwei in Achsrichtung unmittelbar aneinanderliegende Statormodule 14 (vgl. auch Fig. 2) und der Rotor 12 zwei auf der Rotorwelle 13 axial hintereinander drehfest aufgesetzte Rotormodule 15. Jedes Statormodul 14 ist in einem Gehäuse 16 aus magnetisch nicht leitfähigem Material, z.B. Aluminium oder Kunststoff, aufgenommen, das aus einem äußeren, topfförmigen Gehäuseteil 161 und aus einem inneren, scheibenförmigen Gehäuseteil 162 zusammengesetzt ist (Fig. 5). Wie Fig. 5 zeigt und insbesondere aus Fig. 6 zu erkennen ist, liegen die beiden scheibenförmigen Gehäuseteile 162 der beiden, jeweils ein Statormodul 14 aufnehmenden Gehäuse 16 unmittelbar aneinander und werden von den beiden topfförmigen Gehäuseteilen 161 der Gehäuse 16, die mit ihren kreisringförmigen Topfrändern aneinanderstoßen, übergriffen. Jedes Gehäuseteil 161, 162 weist eine zentrale Öffnung 17 bzw. 18 auf, wobei in den zentralen Öffnungen 17 der beiden äußeren, topfförmigen Gehäuseteile 161 jeweils ein Lagerschild 19 aufgenommen ist, in dem die Rotorwelle 13 mittels eines Drehlagers 20 drehend gelagert ist.

Der Aufbau eines Statormoduls 14 ist in der DE 100 39 466 A1 ausführlich beschrieben, so daß hierauf nur kurz eingegangen wird. Das Statormodul 14 weist eine konzentrisch zur Stator-, Rotor- oder Gehäuseachse angeordnete Ringspule 21 auf, die in einem Spulenkörper 22 aufgenommen ist. Der ringförmige Spulenkörper 22 hat einen U-förmigen Querschnitt, wobei dessen U-Öffnung nach außen weist, also dem topfförmigen Gehäuseteil 161 zugekehrt ist. Wie Fig. 1, 2 und 3 zeigen besitzt der Spulenkörper 22 damit zwei parallele, ringförmige Schenkel 221 und 222 und einen diese miteinander einstückig verbindenden, ringförmigen Quersteg 223. Die Ringspule 21 ist zwischen den Schenkeln 221 und 222 aufgenommen und auf den Quersteg 223 aufgewickelt. Der Spulenkörper 22 mit einliegender Ringspule 21 wird von außen her von in Umfangsrichtung der Ringspule 21 äquidistant angeordneten, U-förmigen Statorjochen 23 übergriffen, während sich am inneren Umfang des Spulenkörpers 22 ebenfalls äquidistant angeordnete Statorstege 24 axial über den Spulenkörper 22 erstrecken. Der Abstand der Statorjoche 23 voneinander und der Abstand der Statorstege 24 voneinander ist gleich groß, und die Statorstege 24 sind um einen halben Abstand gegenüber den Statorjochen 23 verdreht angeordnet. Die Statorjoche 23 und Statorstege 24 bilden die n Statorpole der Transversal- bzw. Unipolar-Transversalflußmaschine, wobei der Abstand zwischen den n/2 Statorjochen 23 bzw. den n/2 Statorstegen 24 jeweils einer Polteilung entspricht. Statorjoche 23 und Statorstege 24 sind um eine halbe Polteilung gegeneinander verschoben. Jedes Statorjoch 23 und jeder Statorsteg 24 ist aus einer Mehrzahl aneinanderliegender Blechlamellen zusammengesetzt.

Die Statorjoche 23 und die Statorstege 24 - im folgenden gemeinsam Statorelemente genannt - liegen unter Belassung eines sehr kleinen Luftspalts 25 (Fig. 6) dem Rotormodul 15 radial gegenüber. Auf den Aufbau des Rotormoduls 15 der Transversalflußmaschine in Fig. 1 und des Rotormoduls der Unipolar-Transversalflußmaschine gemäß Fig. 6 wird hier, da nicht relevant, nicht näher eingegangen. Insoweit wird für die Transversalflußmaschine auf "Michael Bork, Entwicklung und Optimierung einer fertigunsgerechten Transversalflußmaschine, Diss. 82, RWTH Aachen, Shaker Verlag, Aachen, 1997, Seite 8 ff." und bezüglich der Unipolar-Transversalflußmaschine auf die DE 100 39 466 A1 verwiesen. Bei beiden Maschinen ist es notwendig, daß die Luftspalte 25 zwischen Statormodul 14 und Rotormodul 15 möglichst klein sind, so daß die Notwendigkeit besteht, die Statorelemente 23, 24 in Radialrichtung sehr genau zu positionieren.

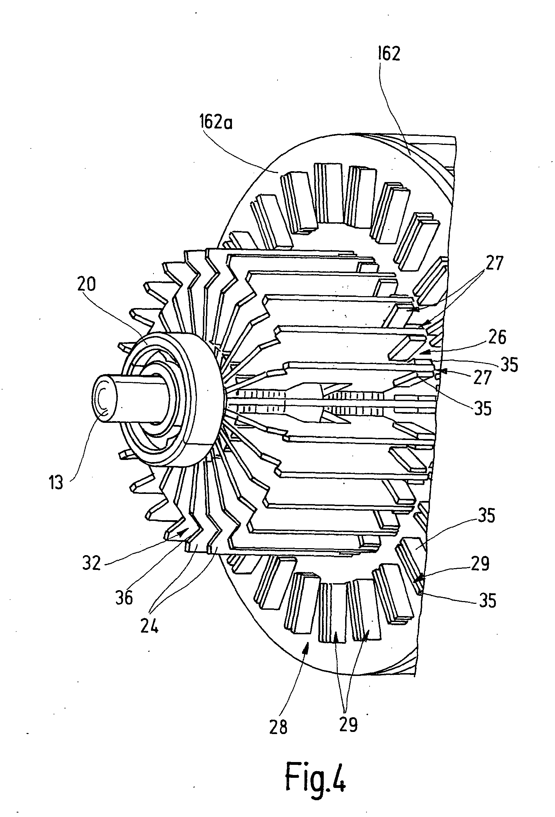

Zum Zwecke einer einfachen Fertigung des Statormoduls 14 mittels Fügetechnik, die sehr einfach automatisiert werden kann, sind auf den einander zugekehrten, sich radial erstreckenden Planflächen 161a und 162a der beiden Gehäuseteile 161, 162 eines jeden Gehäuses 16 eine zur Gehäuseachse konzentrische, innere Reihe 26 von äquidistant angeordneten Klemmen 27 und eine die erste Klemmen-Reihe 26 konzentrisch umschließende, äußere Reihe 28 von äquidistant angeordneten Klemmen 29 ausgebildet. Zwischen den Klemmen 27 der inneren Reihe 26 sind Positionierelemente 31 vorhanden, die mit an den radial verlaufenden Stirnkanten der Statorstege 24 ausgebildeten Positionierelementen 32 derart korrespondieren, daß sie eine Fixierung der Statorstege 24 in Radialrichtung bewirken. Zwischen den Klemmen 29 der äußeren Reihe 28 sind Positionierelemente 33 vorgesehen, die mit Positionierelementen 34 an den in Radialrichtung sich erstreckenden Stirnkanten der Statorjoche 23 bzw. deren Jochschenkeln in der Weise korrespondieren, daß sie ebenfalls eine radiale Fixierung der Statorjoche 23 herbeiführen. Wie Fig. 4 und 5 für den scheibenförmigen Gehäuseteil 162 zeigen, sind die Klemmen 27, 29 in den beiden Reihen 26, 28 identisch ausgebildet und werden von jeweils zwei von der Planfläche 161a des scheibenförmigen Gehäuseteils 162 axial abstehenden, voneinander beabstandeten Haltestegen 35 gebildet, deren Abstand wenig größer ist als die Dicke der Statorstege 24 bzw. der Statorjoche 23. Die in Fig. 2 - 5 nicht zu sehenden Klemmen 27, 29 an der Planfläche 161a des topfförmigen Gehäuseteils 161 (Fig. 1 und 6) sind identisch den Klemmen 27, 29 an dem scheibenförmigen Gehäuseteil 162 ausgebildet. Die an den Statorelementen, also den Statorstegen 24 einerseits und den Statorjochen 23 andererseits, angeordneten Positionierelemente 32, 34 sind von spitzwinkligen Einkerbungen 36 in den radial sich erstreckenden Stirnkanten der Statorelemente 24, 23 gebildet, während die in den Klemmen 27, 29 angeordneten Positionierelemente 31, 33 von zwischen den Haltestegen 35 sich erstreckenden, spitzwinkligen Höckern 37 gebildet sind. Wie in Fig. 4 nur für die Statorstege 24 in Verbindung mit dem scheibenförmigen Gehäuseteil 162 zu sehen ist, sind nach dem Zusammenfügen des Statormoduls 14 die Statorelemente 24, 23 in den Klemmen 27, 29 formschlüssig aufgenommen und gegen Verschiebung in Umfangsrichtung fixiert. Gleichzeitig greifen - wie in Fig. 1 und 6 zu sehen ist - die Positionierelemente 31 und 32 einerseits und 33 und 34 andererseits formschlüssig ineinander, so daß eine hochgenaue Fixierung der Statorelemente 24, 23 in Radialrichtung gewährleistet ist, insbesondere dann, wenn die Statorstege 24 und Statorjoche 23 mit den beiden Gehäuseteilen durch eine auf die Gehäuseteile aufgebrachte axiale Fügekraft F (Fig. 6) axial verpreßt sind.

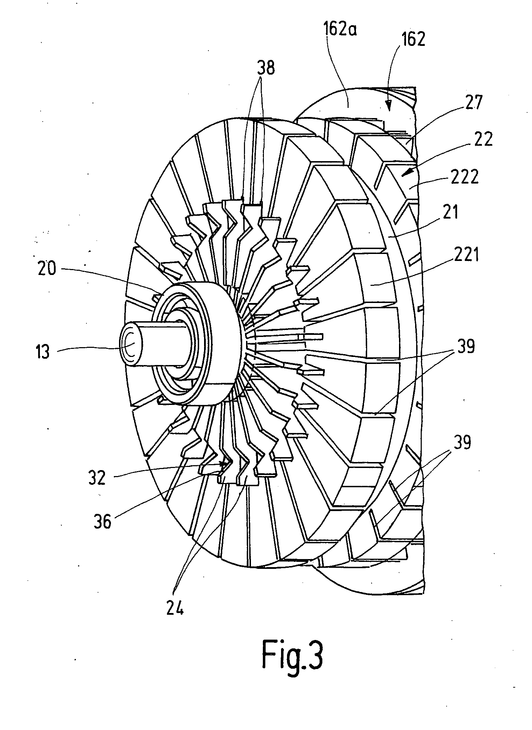

Zur Vereinfachung des Fügeprozesses der Statorelemente 23, 24 wird mittels des Spulenkörpers 22 der Ringspule 21 eine Vorfixierung der Statorelemente 23, 24 in der Weise durchgeführt, daß beim Aufschieben der beiden Gehäuseteile 161, 162 auf die vorpositionierten Statorelemente 23, 24 diese sich automatisch in die Klemmen 27, 29 in den beiden Reihen 26, 28 an jedem Gehäuseteil 161, 162 einschieben. Hierzu sind im Spulenkörper 22 Schlitze 38 zum Einführen der Statorstege 24 und Schlitze 39 zum Einführen der Statorjoche 23 eingebracht (Fig. 3). Der Abstand der Schlitze 38 bzw. 39 voneinander entspricht der Polteilung, wobei wiederum die Schlitze 38 gegenüber den Schlitzen 39 um eine halbe Polteilung in Umfangsrichtung des Spulenkörpers 22 verschoben sind. Die Schlitzbreite ist etwas größer gewählt als die Dicke der Statorstege 24 bzw. Statorjoche 23, so daß diese mit geringem Spiel in den Schlitzen 38, 39 einliegen. Dabei werden bevorzugt für jeden Statorsteg 24 oder jedes Statorjoch 23 ein Paket von Blechlamellen in die Schlitze 38 bzw. 39 eingesetzt, die bevorzugt nicht miteinander vorverbundenen sind, aber auch zuvor stanzpaketiert werden können. Entsprechend der Form der Statorjoche 23 bzw. der Statorstege 24 erstrecken sich die Schlitze 39 längs der ringförmigen Schenkel 221, 222 und über die freien, außenliegenden Stirnflächen der Schenkel 221, 222 des Spulenkörpers 22, während die Schlitze 38 als Axialschlitze in den ringförmigen Quersteg 223 des Spulenkörpers 22 eingebracht sind.

Die Montage des Statormoduls 14 erfolgt mit einfacher Fügetechnik der Statorelemente 23, 24, indem zunächst die Statorjoche 23 in den Spulenkörper 22 eingesetzt und dann mit ihren einem Jochschenkel in die Klemmen 29 der äußeren zweiten Reihe 28 eines der beiden Gehäuseteile, z.B. des scheibenförmigen Gehäuseteils 162, eingeschoben werden. Danach werden die Statorstege 24 durch die Schlitze 38 hindurch in die Klemmen 27 der inneren Reihe 26 eingesteckt. Nunmehr wird der andere Gehäuseteil, z.B. der topfförmige Gehäuseteil 161, auf den Spulenkörper 22 mit den vorpositionierten Statorelementen 23, 24 so aufgeschoben, daß die Klemmen 29 über den anderen Jochschenkel der Statorjoche 23 und die Klemmen 27 über die andere radiale Stirnkante der Statorstege 24 hinweggreifen und die Höcker 37 zwischen den Klemmen 29, 27 in die Einkerbungen 36 an den Statorjochen 23 und Statorstegen 24 eindringen. In gleicher Weise wird das zweite Statormodul 14 zusammengefügt. Die beiden Statormodule 14 werden positionsrichtig axial aneinandergesetzt, so daß die Gehäuseachsen miteinander fluchten. Ggf. wird das eine Gehäuse 16 gegenüber dem anderen Gehäuse 16 um 90° elektrisch verdreht. Nunmehr werden die beiden äußeren, topfförmigen Gehäuseteile 161, die die beiden inneren, scheibenförmigen Gehäuseteile 162 axial übergreifen und mit ihren ringförmigen Gehäuserändern einander zugekehrt sind, durch eine axiale Fügekraft F (Fig. 6) zusammengedrückt, wobei die Statorelemente 23, 24 axial in den Klemmen 29, 27 verpreßt werden und die Höcker 37 toleranzfrei in die Einkerbungen 26 eindringen. Unter Aufrechterhaltung der Fügekraft F werden die beiden Gehäuseteile 161 miteinander fest verbunden, was beispielsweise durch Laser- oder Ultraschallschweißen bewirkt wird.

Selbstverständlich ist es möglich, die beiden scheibenförmigen Gehäuseteile 162 der beiden jeweils ein Statormodul 14 einschließenden Gehäuse 16 einstückig herzustellen. In diesem Fall müssen die Klemmen 27, 29 und Positionierelemente 31 und 33 auf den beiden voneinander abgekehrten, planen Scheibenflächen des beiden Gehäuse 16 gemeinsamen, scheibenförmigen Gehäuseteils 162 ausgebildet werden. Falls gefordert wird, daß die Statormodule 14 um 90° elektrisch gegeneinander verschoben sein müssen, ist die Anordnung der Klemmen 27, 29 auf der einen Scheibenfläche des gemeinsamen Gehäuseteiles 162 um 90° verdreht gegenüber der Anordnung der Klemmen 27, 29 auf der anderen Scheibenfläche vorzunehmen. Die Montage einer solchen zweisträngigen Transversalfluß- bzw. Unipolar-Transversalflußmaschine erfolgt in gleicher Weise wie vorstehend beschrieben, wobei zunächst das eine Statormodul 14 gefügt und mit dem topfförmigen Gehäuseteil 161 abgedeckt wird und danach das zweite Statormodul 14 gefügt und mit dem zweiten topfförmigen Gehäuseteile 161 abgedeckt wird und anschließend die beiden äußeren Gehäuseteile 161 unter Aufbringen einer axialen Fügekraft F auf beide Gehäuseteile 161 miteinander verschweißt werden.

Besonders vorteilhaft ist es, wenn zwischen den beiden aneinanderliegenden, scheibenförmigen Gehäuseteilen 162 - oder im Falle des einstückigen, scheibenförmigen Gehäuseteils 162 für beide Gehäuse 16 in dem gemeinsamen Gehäuseteil 162 - die Leiterbahnen für den elektrischen Anschluß der beiden Ringspulen 21 in den beiden Statormodulen 14 geführt sind. Diese Leiterbahnen werden dabei vorzugsweise mittels eines Stanzgitters realisiert, das entweder zwischen den beiden scheibenförmigen Gehäuseteilen 162 eingespannt oder in dem gemeinsamen, scheibenförmige Gehäuseteil 162 eingegossen ist. Die Gehäuseteile 161, 162 sind aus Kunststoff oder Aluminium im Gieß- oder Gußverfahren hergestellt.

## Patentansprüche

1. Transversalflußmaschine, insbesondere Unipolar-Transversalflußmaschine, mit mindestens einem Statormodul (14), das in einem aus zwei axial zusammengefügten Gehäuseteilen (161, 162) zusammengesetzten Gehäuse (16) aufgenommen ist und eine konzentrisch zur Gehäuseachse angeordnete, elektrische Ringspule (21) sowie sich innen und außen axial über die Ringspule (21) erstreckende Statorelemente (23, 24) aufweist, **dadurch gekennzeichnet, daß** an den Gehäuseteilen (161, 162) angeordnete Klemmen (27, 29), die Statorelemente (24, 23) seitlich zumindest teilweise übergreifen und daß in den Klemmen (27, 29) einerseits und an den radialen Statorelementen (24, 23) andererseits miteinander korrespondierende Positionierelemente (31 - 34) vorhanden sind, die die Statorelemente (24, 23) radial unverschieblich im Gehäuse (16) festlegen.

2. Maschine nach Anspruch 1, **dadurch gekennzeichnet, daß** die Klemmen (27, 29) auf einander zugekehrten, radialen Planflächen (161a, 162a) der Gehäuseteile (161, 162) axial abstehen und die Statorelemente (23, 24) mit ihren radialen Stirnkanten in die Klemmen (29, 27) eintauchen.

3. Maschine nach Anspruch 2, **dadurch gekennzeichnet, daß** die Klemmen (27, 29) in zwei konzentrischen Reihen (26, 28) angeordnet sind.

4. Maschine nach einem der Ansprüche 1 - 3, **dadurch gekennzeichnet, daß** die an den Statorelementen (23, 24) vorhandenen Positionierelemente (32, 34) von spitzwinkligen Einkerbungen (36) in den radialen Stirnkanten der Statorelemente (24, 23) und die in den Klemmen (27, 29) vorhandenen Positionierelemente (31, 33) von formschlüssig in die Einkerbungen (36) eingreifenden, spitzwinkligen Höckern (37) gebildet sind.

5. Maschine nach Anspruch 4, **dadurch gekennzeichnet, daß** die an den Gehäuseteilen (161, 162) ausgebildeten Klemmen (29, 27) jeweils zwei von der Planfläche (161a, 162a) der Gehäuseteile (161, 162) axial abstehende, voneinander in Umfangsrichtung beabstandete Haltestege (35) aufweisen, deren Abstand voneinander wenig größer ist als die Dicke der Statorelemente (23, 24), und daß die spitzwinkligen Höcker (37) sich jeweils zwischen den Haltestegen (35) einer jeden Klemme (29, 27) erstrecken.

6. Maschine nach einem der Ansprüche 1 - 5, **dadurch gekennzeichnet, daß** die Statorelemente (23, 24) zwischen den beiden Gehäuseteilen (161, 162) axial verspannt sind.

7. Maschine-nach einem der Ansprüche 1 - 6, **dadurch gekennzeichnet, daß** die Ringspule (21) in einem Spulenkörper (22) einliegt und daß im Spulenkörper (22) Schlitze (39) zum Einführen der Statorelemente (23, 24), die einen dem Abstand der Statorelemente (23, 24) entsprechenden Abstand voneinander und eine gegenüber der Dicke der Statorelemente (23, 24) größere Schlitzbreite aufweisen, vorhanden sind.

8. Maschine nach einem der Ansprüche 1 - 7, **dadurch gekennzeichnet, daß** jedes Statorelement (23, 24) eine Mehrzahl von lose aneinanderliegenden Lamellen aufweist.

9. Maschine nach einem der Ansprüche 3 - 8, **dadurch gekennzeichnet, daß** die Statorelemente die Ringspule (21) außen übergreifende, äquidistant angeordnete Statorjoche (23) und sich innen axial über die Ringspule (21) erstreckende, äquidistant angeordnete Statorstege (24) aufweist und daß der gegenseitige Abstand der Klemmen (27, 29) in den beiden konzentrischen Reihen (26, 28) einerseits dem gegenseitigen Abstand der Statorstege (24) und andererseits dem gegenseitigen Abstand der Statorjoche (23) entspricht.

10. Maschine nach einem der Ansprüche 1 - 9, **dadurch gekennzeichnet, daß** das Gehäuse (16) aus magnetisch nicht leitfähigem Werkstoff gefertigt ist.

11. Maschine nach einem der Ansprüche 1 - 10, **dadurch gekennzeichnet, daß** der eine Gehäuseteil (161) Topfform und der andere Gehäuseteil (162) Scheibenform aufweist und jeder Gehäuseteil (161, 162) eine zentrale Öffnung (17, 18) enthält.

12. Maschine nach Anspruch 11, **dadurch gekennzeichnet, daß** bei zwei axial nebeneinander angeordneten Statormodulen (14) mit zwei Gehäusen (16) die beiden scheibenförmigen Gehäuseteile (162) mit ihren von den Klemmen (27, 29) abgekehrten Scheibenflächen aneinanderliegen.

13. Maschine nach Anspruch 12, **dadurch gekennzeichnet, daß** die beiden topfförmigen Gehäuseteile (161) die aneinanderliegenden, scheibenförmigen Gehäuseteile (162) axial übergreifen und mit ihren kreisringförmigen Topfrändern aneinanderstoßen und daß die beiden topfförmigen Gehäuseteile (161), vorzugsweise unter Aufbringung einer axialen Fügekraft auf die Gehäuseteile (161), fest miteinander verbunden sind.

14. Maschine nach Anspruch 13, **dadurch gekennzeichnet, daß** die aneinanderstoßenden Topfränder der beiden topfförmigen Gehäuseteile (161) miteinander verschweißt sind, z.B. durch Laser- oder Ultraschallschweißen.

15. Maschine nach einem der Ansprüche 12 - 14, **dadurch gekennzeichnet, daß** die Anordnung der in dem einen Gehäuse (16) vorhandenen Klemmen (27, 29) und die Anordnung der in dem anderen Gehäuse (16) vorhandenen Klemmen (27, 29) um 90° elektrisch gegeneinander verdreht sind.

16. Maschine nach Anspruch 15, **dadurch gekennzeichnet, daß** die beiden Gehäuse (16) identisch ausgebildet und um 90° elektrisch gegeneinander verdreht aneinander festgelegt sind.

17. Maschine nach Anspruch 15, **dadurch gekennzeichnet, daß** die beiden aneinanderliegenden, scheibenförmigen Gehäuseteile (162) der beiden Gehäuse (16) einstückig ausgebildet sind und die Anordnung der Klemmen (27, 29) auf der einen Scheibenfläche des beiden Gehäusen (16) gemeinsamen, scheibenförmigen Gehäuseteils (162) gegenüber der Anordnung der Klemmen (27, 29) auf der anderen Scheibenfläche um 90° elektrisch gedreht vorgenommen ist und daß die beiden topfförmigen Gehäuseteile (161) der beiden Gehäuse (16) identisch ausgebildet und um 90° elektrisch gegeneinander gedreht miteinander verbunden sind.

18. Maschine nach einem der Ansprüche 12 - 16, **dadurch gekennzeichnet, daß** zwischen den aneinanderliegenden scheibenförmigen Gehäuseteilen (162) der beiden, jeweils ein Statormodul (14) aufnehmenden Gehäuse (16) elektrische Zuleitungen zu den Ringspulen (21) der beiden Statormodule (14) geführt sind.

19. Maschine nach Anspruch 17, **dadurch gekennzeichnet, daß** in dem beiden Gehäusen (16) gemeinsamen, scheibenförmigen Gehäuseteil (162) elektrische Zuleitungen zu den Ringspulen (21) der beiden Statormodule (14) eingegossen sind.

20. Maschine nach Anspruch 18 oder 19, **dadurch gekennzeichnet, daß** die elektrischen Zuleitungen als Stanzgitter (30) ausgebildet sind.

21. Maschine nach einem der Ansprüche 11 - 20, **dadurch gekennzeichnet, daß** in den zentralen Ausnehmungen (17) der beiden topfförmigen Gehäuseteile (161) jeweils ein Lagerschild (19) für ein Drehlager (20) einer Rotorwelle (13) aufgenommen ist.
